# EUROPEAN PATENT APPLICATION

(11) **EP 2 592 861 A1**
(43) Date of publication of application: **15.05.2013**
(21) Application number: 11803575.7
(22) Date of filing: 05.07.2011
(51) Int. Cl.: H04W 24/10, H04W 48/18, H04W 92/02

(54) **MOBILE COMMUNICATION METHOD AND RADIO BASE STATION**

(30) Priority: 06.08.2010 JP 2010178195; 07.07.2010 JP 2010154905
(71) Applicant: NTT DOCOMO, Inc., Chiyoda-ku Tokyo 100-6150 (JP)
(72) Inventor: TAKAHASHI, Hideaki, Tokyo 100-6150 (JP); HAPSARI, Wuri Andarmawanti, Tokyo 100-6150 (JP); ISHII, Minami, Tokyo 100-6150 (JP)
(74) Representative: HOFFMANN EITLE
(86) International application number: PCT/JP2011/065352
(87) International publication number: WO 2012/005241

(57) **Abstract**

A mobile communication method according to the present invention includes: the steps of: acquiring, at a mobile station UE connected in a cell #1 controlled by an E-UTRAN-system radio base station eNB, information on a cell #2 controlled by a UTRAN, radio base station NodeB in response to an instruction from the radio base station eNB; reporting, from the mobile station UE to the radio base station eNB, the acquired information on the cell #2 cell; and notifying, from the radio base station eNB to a UTRAN-system radio network controller RNC which provides service to the cell #2, information on the cell #1.

## Description

### Technical Field

The present invention relates to a mobile communication method and a radio base station.

### Background Art

A radio base station eNB is configured to be able to cause a mobile station UE in a cell controlled by an Evolved Universal Terrestrial Radio Access Network (E-UTRAN) to acquire and report information on a cell controlled by a Radio Access Technology (RAT) except the E-UTRAN, for example, a Universal Terrestrial Radio Access Network (UTRAN) or a GSM EDGE Radio Access Network (GERAN), using an "Automatic Neighbor Relation (ANR)" defined by the 3GPP.

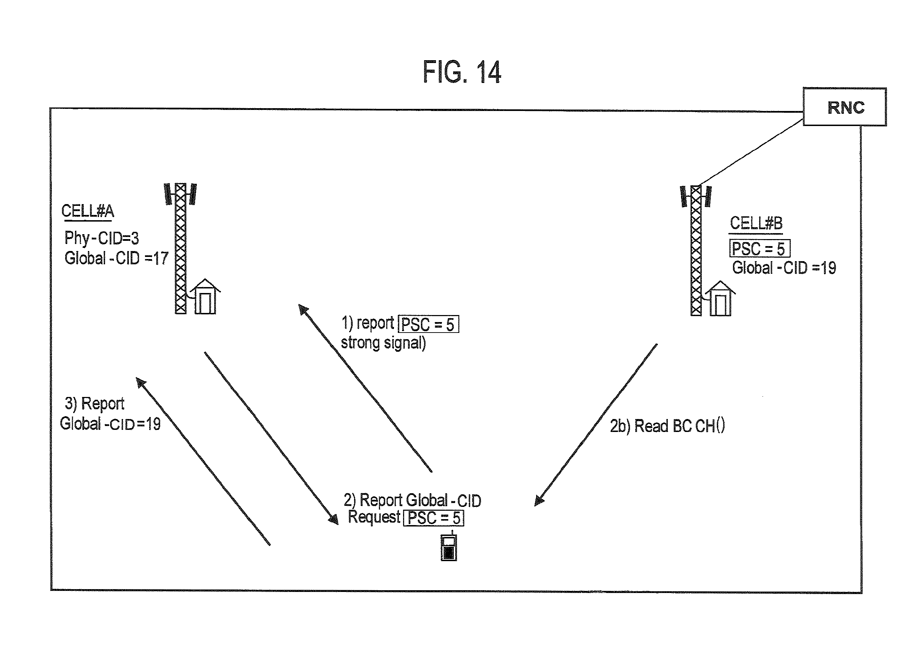

For example, as illustrated in Fig. 14, in response to an instruction from the radio base station eNB, the mobile station UE connected in a cell #A controlled by the radio base station eNB scans frequencies used in a cell #B controlled by a radio base station NodeB, and the mobile station UE reports detected "Primary Scrambling Code (PSC) = 5" to the radio base station eNB in Step 1.

In Step 2, the radio base station eNB instructs the mobile station UE to acquire and report information on the cell #B of "PSC = 5", for example, a "cell global ID (Global-CID)", a "Routing Area Code (RAC)", or a "Local Area Code (LAC)".

The mobile station UE acquires the broadcast information in the cell #B in Step 2b. In Step 3, the mobile station UE reports information on the cell #B, such as "Global-CID = 19" which is included in the broadcast information, to the radio base station eNB.

### Citation List

### Non-Patent Literature

Non-Patent Literature 1: 3GPP TS36.300 (V10.0.0), "Evolved Universal Terrestrial Radio Access (E-UTRA) and Evolved Universal Terrestrial Radio Access Network (E-UTRAN) Physical Channels", June 2010.
Non-Patent Literature 2: 3GPP TS36.413 (V9.3.0), "Evolved Universal Terrestrial Radio Access Network (E-UTRAN); S1 application protocol (S1AP)", June 2010.
Non-Patent Literature 3: 3GPP TS36.331 (V9.3.0), "Radio Resource Control (RRC); Protocol specification", June 2010.

### Summary of Invention

### Technical Problem

However, in the conventional mobile communication system, the applicant found a problem in that the information on the controlled cell cannot be exchanged between a Radio Network Controller (RNC) and the radio base station eNB.

The present invention has been made in view of the foregoing problem, and an object of the invention is to provide a mobile communication method and a radio base station, which can exchange the information on the controlled cell between the radio network controller RNC and the radio base station eNB.

### Solution to Problem

A first aspect of the present invention is summarized as a mobile communication method including: the steps of: acquiring, at a mobile station connected in a first cell controlled by a first-communication-system radio base station, information on a second cell controlled by a second-communication-system radio base station in response to an instruction from the first-communication-system radio base station; reporting, from the mobile station to the first-communication-system radio base station, the acquired information on the second cell; and notifying, from the first-communication-system radio base station to a second-communication-system radio network controller which provides service to the second cell, information on the first cell.

A second aspect of the present invention is summarized as a radio base station that is of a first-communication-system radio base station, including: a cell information acquisition unit configured to acquire information on a second cell controlled by a second-communication-system radio base station from a mobile station connected in a first cell controlled by the first-communication-system radio base station; and a notification unit configured to notify, to a second-communication-system radio network controller which provides service to the second cell, information on the first cell.

### Advantageous Effects of Invention

As described above, according to the present invention, the mobile communication method and the radio base station, which can exchange the information on the controlled cell between the radio network controller RNC and the radio base station eNB.

### Brief Description of Drawings

Fig. 1 is an entire configuration diagram of a mobile communication system according to a first embodiment of the invention.
Fig. 2 is a view illustrating an operation of the mobile communication system according to the first embodiment of the invention.
Fig. 3 is a sequence diagram illustrating the operation of the mobile communication system according to the first embodiment of the invention.
Fig. 4 is a view illustrating an example of an information element in "eNB DIRECT INFORMATION TRANSFER" used in the mobile communication system according to the first embodiment of the invention.
Fig. 5 is a view illustrating an example of an information element in an information element "SON Information Transfer for E-UTRAN-UTRAN" in an information element "Inter-system Information Transfer" in the "eNB DIRECT INFORMATION TRANSFER" used in the mobile communication system according to the first embodiment of the invention.
Fig. 6 is a view illustrating an example of the information element in an information element "SON information for E-UTRAN-UTRAN" in the information element "SON Information Transfer for E-UTRAN-UTRAN" in the information element "Inter-system Information Transfer" in the "eNB DIRECT INFORMATION TRANSFER" used in the mobile communication system according to the first embodiment of the invention.
Fig. 7 is a view illustrating an example of an information element in an information element "SON information transfer routing address for E-UTRAN--UTRAN" in the information element "SON Information Transfer for E-UTRAN-UTRAN" in the information element "Inter-system Information Transfer" in the "eNB DIRECT INFORMATION TRANSFER" used in the mobile communication system according to the first embodiment of the invention.
Fig. 8 is a view illustrating an example of a method for transmitting "SON Information Transfer for E-UTRAN-UTRAN" on GTPv2-C in the mobile communication system according to the first embodiment of the invention.
Fig. 9 is a view illustrating an example of an information element in "DIRECT TRANSFER" used in the mobile communication system according to the first embodiment of the invention.
Fig. 10 is a view illustrating an operation of the mobile communication system according to the first embodiment of the invention.
Fig. 11 is a view illustrating an example of an information element "SON Information" in an information element "SON Configuration Transfer" in the "eNB/MME Cofiguration Transfer" used in the mobile communication system according to the first embodiment of the invention.
Fig. 12 is a view illustrating an example of an information element "RNC-ID Info" in an information element "SON Information Reply" in the information element "SON Information" in the information element "SON Configuration Transfer" in the "eNB/MME Cofiguration Transfer" used in the mobile communication system according to the first embodiment of the invention.
Fig. 13 is a view illustrating an operation of a mobile communication system according to a first modification of the invention.
Fig. 14 is a view illustrating an operation of a conventional mobile communication system.

### Description of Embodiments

### (Mobile Communication System according to First Embodiment of the Invention)

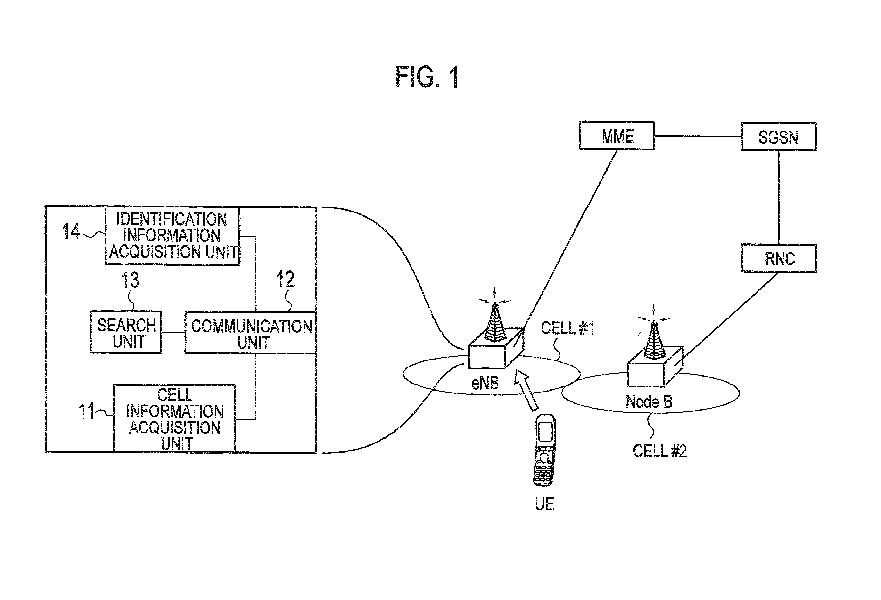

A mobile communication system according to a first embodiment of the invention will be described with reference to Figs. 1 to 12.

As illustrated in Fig. 1, the mobile communication system of the embodiment includes a mobile management node MME (Mobility Management Entity), a radio base station eNB, a packet exchange station SGSN (Serving GPRS Support Node), a radio network controller RNC, and a radio base station NodeB.

At this point, the radio base station eNB provides service to a cell #1, and the radio network controller RNC and radio base station provide service to a cell #2.

As illustrated in Fig. 1, the radio base station eNB includes a cell information acquisition unit 11, a notification unit 12, a search unit 13, and an identification information acquisition unit 14.

The cell information acquisition unit 11 is configured to acquire information on the cell #2 controlled by the radio base station NodeB, from a mobile station UE connected in the cell #1.

The cell information acquisition unit 11 is configured to be able to cause the mobile station UE connected in the cell #1 to acquire and report the information on the cell #2, such as the "cell global ID", the "RAC", and the "LAC", by the "ANR".

The notification unit 12 is configured to notify, to the radio network controller RNC which provides the service to the cell #2, the information on the cell #1, such as a "Physical Cell Identity (PCI)", an "Evolved-Cell Global Identity (E-CGI)", an "E-UTRA Absolute Radio Frequency Channel Number (EARFCN) ", and a "Tracking Area Identity (TAI)" of the cell #1.

The notification unit 12 may be configured to notify, to the radio network controller RNC, information on all the cells controlled by the radio base station eNB or the information on the cell satisfying a predetermined condition in the cells controlled by the radio base station eNB.

The search unit 13 is configured to search the radio network controller RNC which provides the service to the cell #2, based on the information on the cell #2 which is acquired by the cell information acquisition unit 11.

For example, the search unit 13 is configured to manage a table that associates an "RNC-ID (identification information on the radio network controller RNC" with the "cell global ID", and the search unit 13 is configured to search the "RNC-ID" associated with the "cell global ID" acquired by the cell information acquisition unit 11.

The notification unit 12 is configured to notify, to the radio network controller RNC which is searched by the search unit 13, the information on the cell #1.

The identification information acquisition unit 14 is configured to acquire identification information "RNC-ID" on the radio network controller RNC which provides the service to the cell #2, from the mobile management node MME or the packet exchange station SGSN, based on the information on the cell #2 which is acquired by the cell information acquisition unit 11.

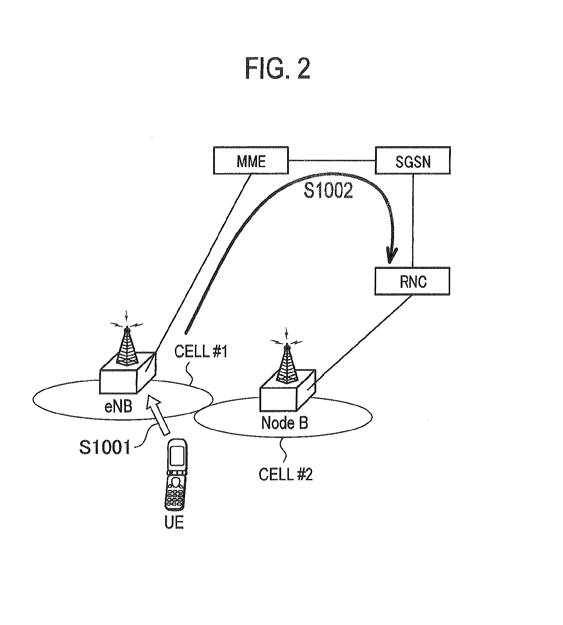

An operation of the mobile communication system according to the embodiment will be described below with reference to Figs. 2 to 12.

First, an operation in the case that the radio base station eNB manages the "RNC-ID" associated with the "cell global ID" reported from the mobile station UE in the mobile communication system according to the embodiment will be described with reference to Figs. 2 to 9.

As illustrated in Fig. 2, in response to an instruction from the radio base station eNB, the mobile station UE connected in the cell #1 acquires the broadcast information in the cell #2, and reports the information on the cell #2, such as such as the "cell global ID", the "RAC", and the "LAC", which are included in the broadcast information, to the radio base station eNB in Step S1001.

In Step S1002, the radio base station eNB notifies, to the radio network controller RNC which provides the service to the cell #2, the information on the cell #1, such as the "PCI", the "E-CGI", the "EARFCN", and the "TAI" of the cell #1.

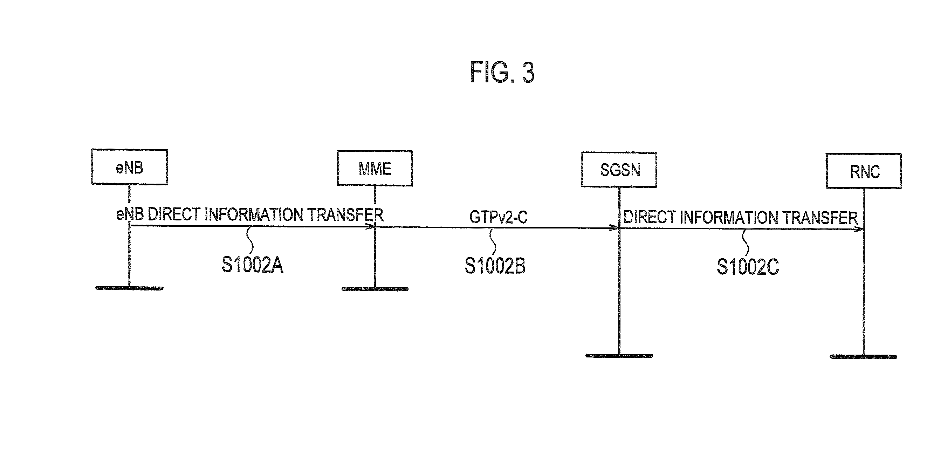

An example of the operation in Step S1002 will specifically be described with reference to Figs. 3 to 9.

As illustrated in Fig. 3, in Step S1002A, the radio base station eNB transmits an "eNB DIRECT INFORMATION TRANSFER" including the information on the cell #1, to the mobile management node MME.

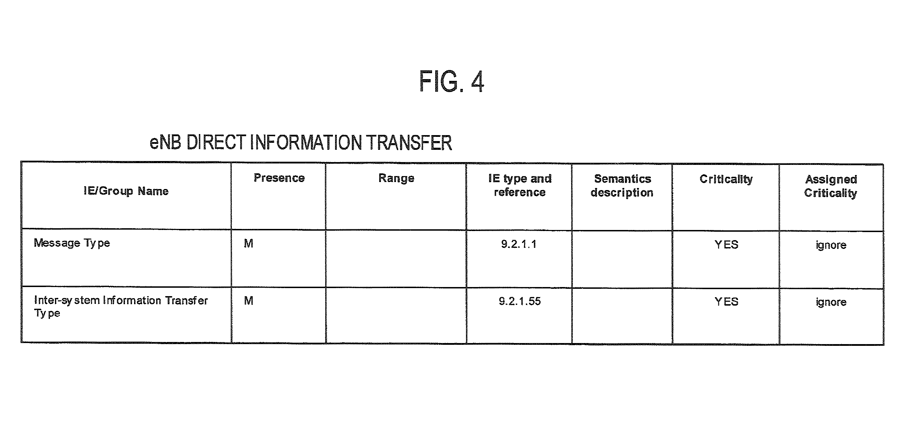

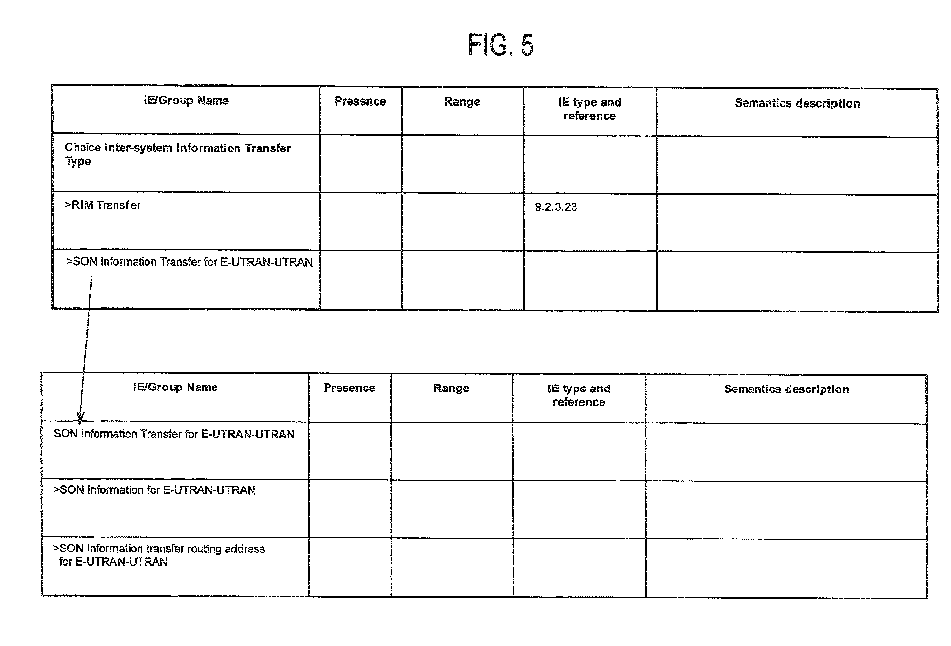

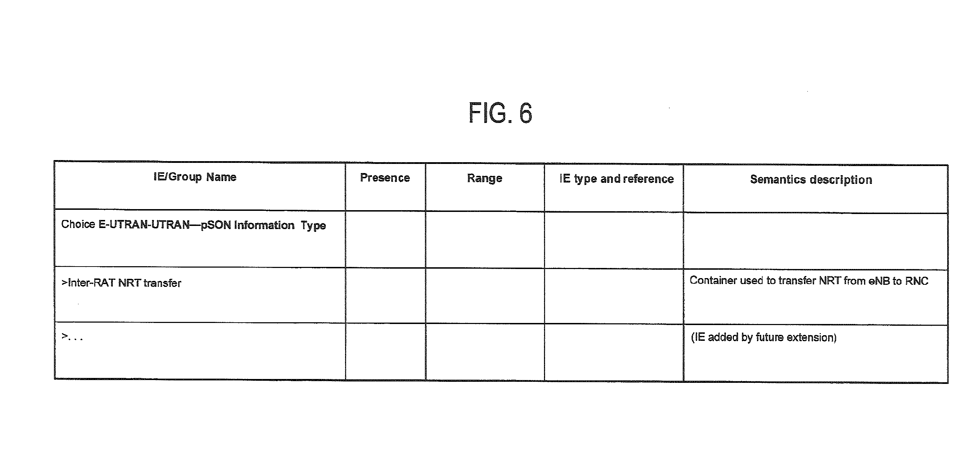

For example, the radio base station eNB includes the information on the cell #1 in an information element "Inter-RAT NRT transfer (see Fig. 6)" in an information element "SON Information for E-UTRAN-UTRAN (see Fig. 5)" in an information element "SON Information Transfer for E-UTRAN-UTRAN (see Fig. 5)" in an information element "Inter-system Information Transfer (see Fig. 4)" in the "eNB DIRECT INFORMATION TRANSFER".

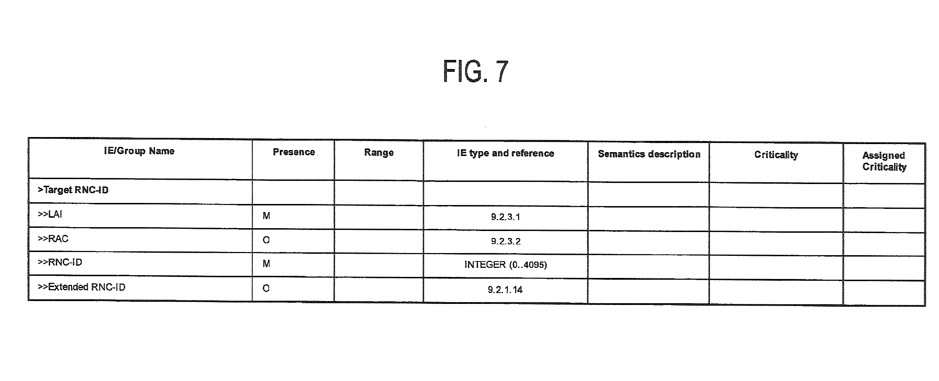

The radio base station eNB may set an information element illustrated in Fig. 7, as a routing address to the radio network controller RNC which provides the service to the cell #2, to an information element "SON Information routing address for E-UTRAN-UTRAN (see Fig. 5)" in the information element "SON Information Transfer for E-UTRAN-UTRAN (see Fig. 5)" in the information element "Inter-system Information Transfer (see Fig. 4)" in the "eNB DIRECT INFORMATION TRANSFER".

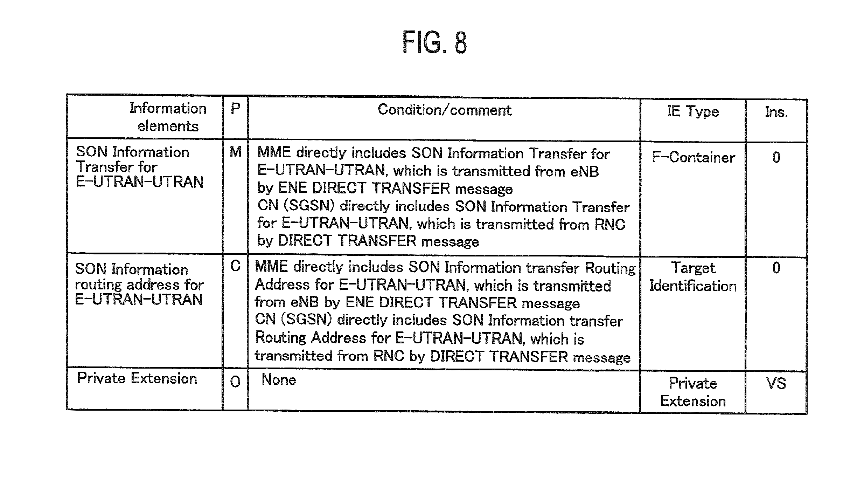

In Step S1002B, the mobile management node MME includes the information element "SON information transfer for E-UTRAN-UTRAN" included in the received "eNB DIRECT INFORMATION TRANSFER" in the information element "SON information transfer for E-UTRAN-UTRAN" in a message in GTPv2-C illustrated in Fig. 8, and the mobile management node MME transmits the information element "SON information transfer routing address for E-UTRAN-UTRAN" included in the received "eNB DIRECT INFORMATION TRANSFER" to the packet exchange station SGSN while including the information element "SON information transfer routing address for E-UTRAN-UTRAN" in an information element "SON information transfer Routing Address for E-UTRAN-UTRAN" in the message in GTPv2-C illustrated in Fig. 8.

In Step S1002C, the packet exchange station SGSN transmits a "DIRECT INFORMATION TRANSFER" including the information on the cell #1, to the radio network controller RNC.

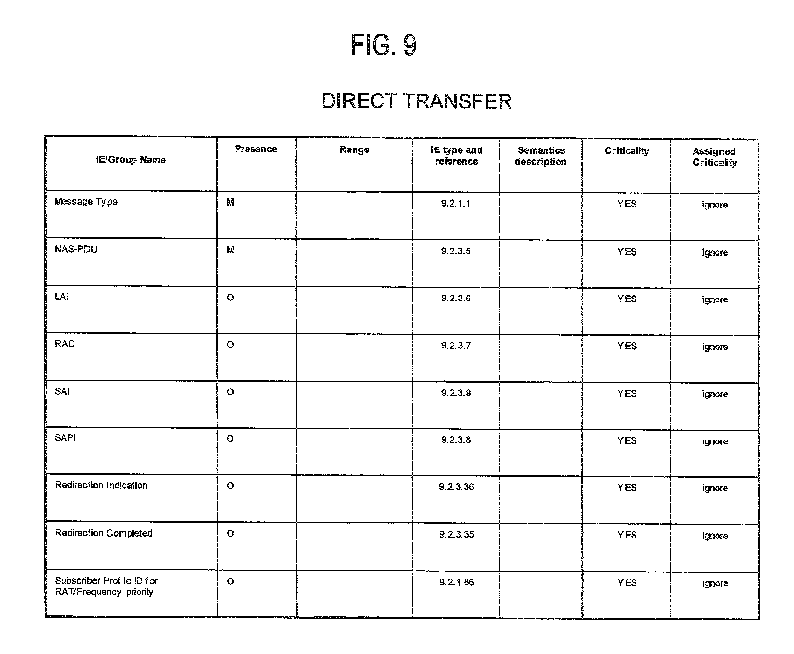

For example, the packet exchange station SGSN includes the information on the cell #1 in an information element "NAS-PDU (see Fig. 9)" in the "DIRECT INFORMATION TRANSFER".

The radio base station eNB may be configured to transmit the information on the cell #1 to the GERAN-system radio network controller RNC using a "RAN Information Transfer (RIM)" which is defined to exchange the information between the GERAN and another RAT.

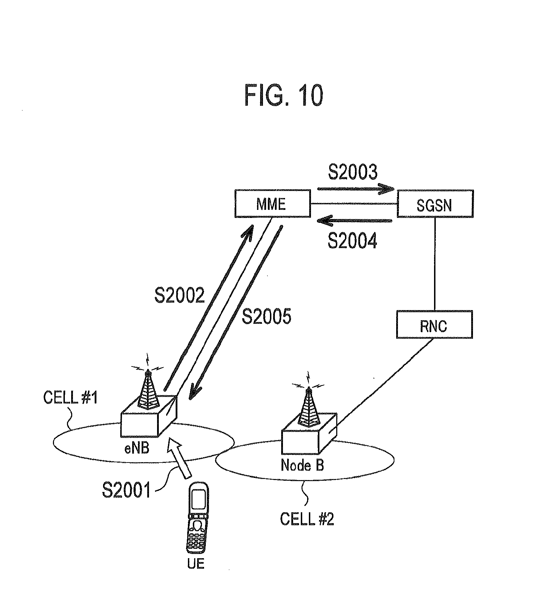

Second, an operation in the case that the radio base station eNB does not manage the "RNC-ID" associated with the "cell global ID" reported from the mobile station UE in the mobile communication system according to the embodiment will be described with reference to Figs. 10 to 12.

As illustrated in Fig. 10, in response to the instruction from the radio base station eNB, the mobile station UE connected in the cell #1 acquires the broadcast information in the cell #B, and reports the information on the cell #B, such as such as the "cell global ID", the "RAC", and the "LAC", which are included in the broadcast information, to the radio base station eNB in Step S2001.

In Step S2002, the radio base station eNB transmits the "eNB Configuration Transfer" including the information on the cell #B to the mobile management node MME.

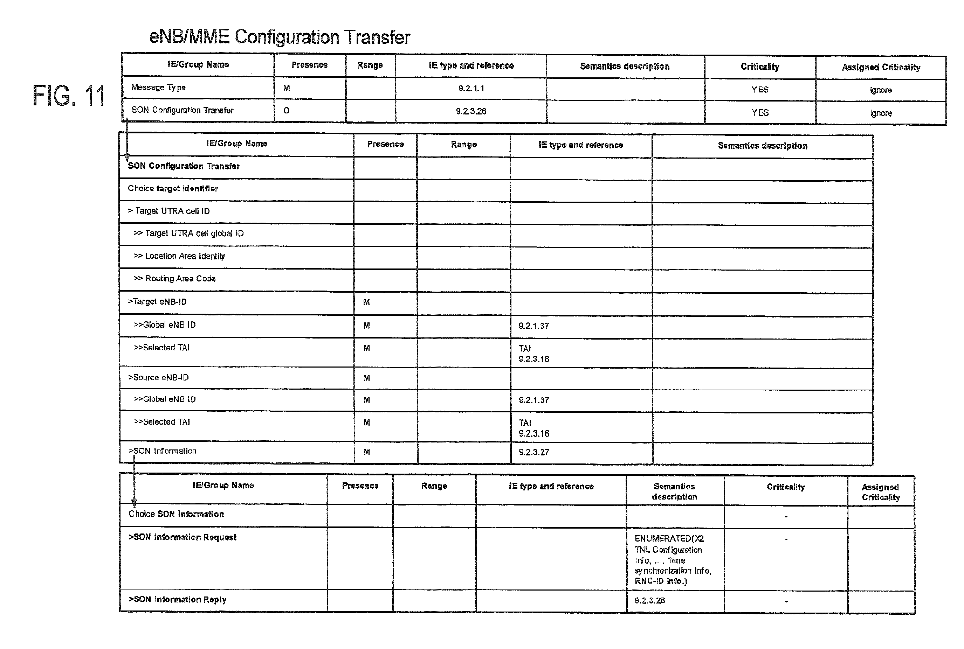

For example, as illustrated in Fig. 11, the radio base station eNB sets the "cell global ID" acquired in Step S2001 to an information element "Traget UTRA cell global ID" in an "eNB Configuration Transfer", sets "PLMN ID" + "LAC" in the "cell global ID" acquired in Step S2001 to an information element "Location Area Identity" in the "eNB Configuration Transfer", and sets the "RAC" acquired in Step S2001 to an information element "Routing Area Identity" in the "eNB Configuration Transfer".

In Step S2003, the mobile management node MME transmits an "MME Configuration Transfer" including the information on the cell #B to the packet exchange station SGSN.

For example, as illustrated in Fig. 11, the mobile management node MME sets the "cell global ID" which is set to an information element "Traget UTRA cell global ID" in the "eNB Configuration Transfer", to the information element "Traget UTRA cell global ID" in the "MME Configuration Transfer", sets an "LAI" which is set to the information element "Location Area Identity" in the "eNB Configuration Transfer", to the information element "Location Area Identity" in the "MME Configuration Transfer", and sets the "RAC" which is set to the information element "Routing Area Identity" in the "eNB Configuration Transfer", to the information element "Routing Area Identity" in the "MME Configuration Transfer".

In Step S2004, the packet exchange station SGSN notifies, to the mobile management node MME, the identification information "RNC-ID" on the radio network controller RNC that provides the service to the cell #2 specified by the "cell global ID", the "RAC", and the "LAI" described above.

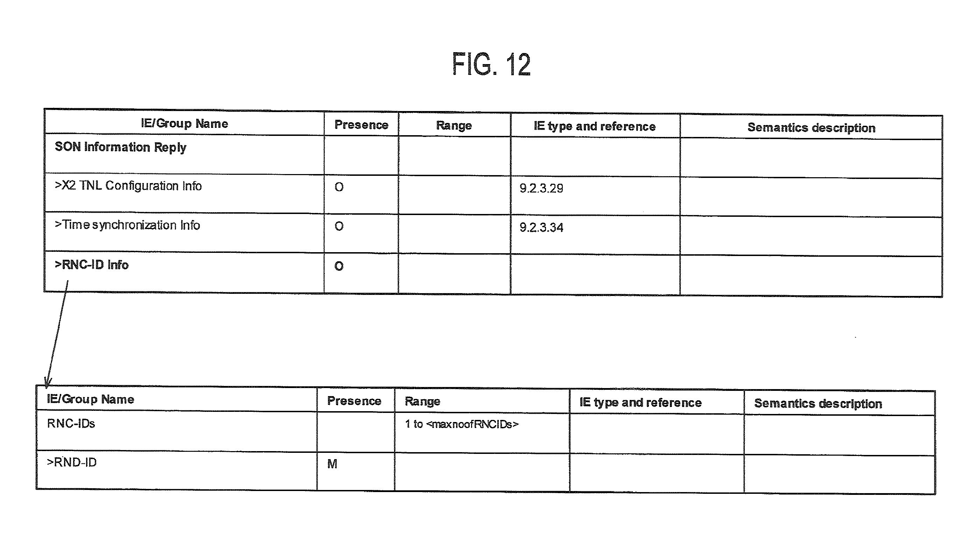

For example, as illustrated in FIG. 12, the packet exchange station SGSN includes the identification information "RNC-ID" on the radio network controller RNC that provides the service to the cell #2 in an information element "RNC-IDs" in an information element "RNC-ID Info" in an information element "SON Information Reply" in an information element "SON Information" in an information element "SON Configuration Transfer" in the "MME Configuration Transfer".

In Step S2005, the mobile management node MME notifies, to the radio base station eNB, the identification information "RNC-ID" on the radio network controller RNC that provides the service to the cell #2.

For example, as illustrated in FIG. 12, the mobile management node MME includes the identification information "RNC-ID" on the radio network controller RNC that provides the service to the cell #2 in the information element "RNC-IDs" in the information element "RNC-ID Info" in the information element "SON Information Reply" in the information element "SON Information" in the information element "SON Configuration Transfer" in the "eNB Configuration Transfer".

Then, like Step S1002 described above, the radio base station eNB notifies, to the radio network controller RNC which provides the information to the cell #2, the information on the cell #1, such as the "PCI", the "E-CGI", the "EARFCN", and the "TAI" of the cell #1.

According to the mobile communication system of the embodiment, the radio base station eNB can acquire the information on the cell #2 controlled by the radio network controller RNC from the mobile station UE, and the radio network controller RNC can acquire the information on the cell #2 controlled by the radio base station eNB from the radio base station eNB.

### (First Modification)

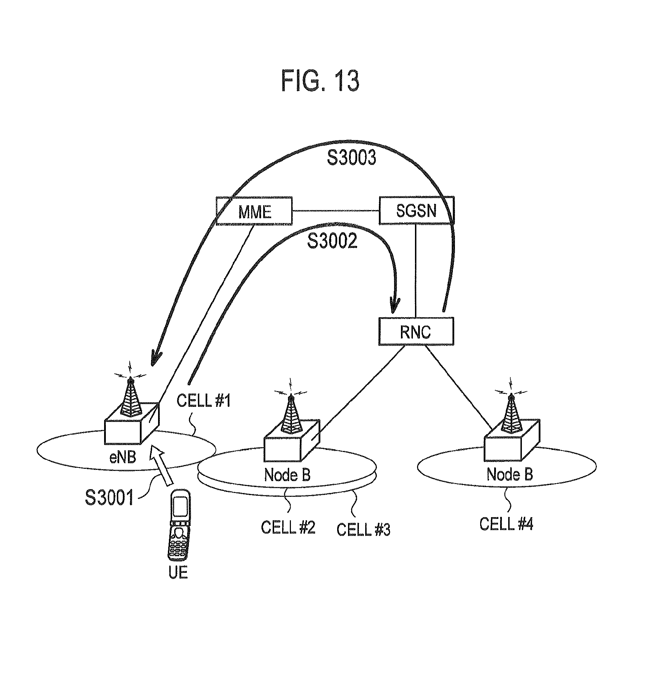

A mobile communication system according to a first modification of the invention will be described below with reference to Fig. 13 by focusing on a difference with the mobile communication system according to the first embodiment.

As illustrated in Fig. 13, in response to the instruction from the radio base station eNB, the mobile station UE connected in the cell #1 acquires the broadcast information in the cell #2, and reports the information on the cell #2, such as such as the "cell global ID", the "RAC", and the "LAC", which are included in the broadcast information, to the radio base station eNB in Step S3001.

In Step S3002, the radio base station eNB notifies, to the radio network controller RNC which provides the service to the cell #2, the information on the cell #1, such as the "PCI", the "E-CGI", the "EARFCN", and the "TAI" of the cell #1.

In Step 3003, in response to the information on the cell #1 received in Step S3002, the radio network controller RNC notifies, to the radio base station eNB, the information on the cells #2 to #4, such as the "PSC", the "cell ID", the "LAC", and the "RAC", which are managed by the radio network controller RNC.

The above features of the first embodiment may be expressed as follows.

A first aspect of the embodiment is the mobile communication method including the steps of: acquiring, at a mobile station UE connected in a cell #1 (a first cell) controlled by an E-UTRAN-system (a first-communication-system) radio base station eNB, information on a cell #2 (a second cell) controlled by a UTRAN-system (a second-communication-system) radio base station NodeB in response to an instruction from the radio base station eNB; reporting, from the mobile station UE to the radio base station eNB, the acquired information on the cell #2 cell; and notifying, from the radio base station eNB to a UTRAN-system radio network controller RNC which provides service to the cell #2, information on the cell #1.

In the first aspect of the embodiment, the mobile communication method may further include a step of: searching, the radio base station eNB, the radio network controller RNC which provides service to the cell #2, based on the received information on the cell #2 (for example, the "cell global ID").

In the first aspect of the embodiment, the mobile communication method may further include a step of: acquiring, at the radio base station eNB, identification information (RNC-ID) on the radio network controller RNC which provides service to the cell #2, from a E-UTRAN-system mobile management node MME or a UTRAN-system packet exchange station SGSN, based on the received information on the cell #2.

In the first aspect of the embodiment, the mobile communication method may further include the step of: notifying, from the radio network controller RNC to the radio base station NodeB, information on the cells #2 to #4 managed by the radio network controller RNC, in response to the notified information on the cell #2.

A second aspect of the embodiment is the radio base station that is of the radio base station eNB, including: a cell information acquisition unit 11 configured to acquire information on the cell #2 controlled by the radio base station NodeB from a mobile station UE connected in the cell #1 controlled by the radio base station eNB; and a notification unit 12 configured to notify, to the radio network controller RNC which provides service to the cell #2, information on the cell #1.

In the second aspect of the embodiment, the radio base station may further include a search unit 13 configured to search the radio network controller RNC which provides service to the cell #2, based on the received information on the cell #2.

In the second aspect of the embodiment, the radio base station may further include an identification information acquisition unit 14 configured to acquire identification information on the radio network controller RNC which provides service to the cell #2, from the mobile management node MME or the packet exchange station SGSN, based on the received information on the cell #2.

In the second aspect of the embodiment, the cell information acquisition unit 11 may be configured to acquire information on cells #2 to #4 managed by the radio network controller RNC, from the radio network controller RNC, in response to the information on the cell #1 notified by the notification unit 12.

The operations of the mobile management node MME, the packet exchange station SGSN, the radio network controller RNC, the radio base station eNB/NodeB, and the mobile station UE may be implemented by hardware, a software module executed by a processor, or a combination of the hardware and the software.

The software module may be provided in any storage medium, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, and a CD-ROM.

The storage medium is connected to the processor such that the processor can write and read information in and from the storage medium. The storage medium may be integrated in the processor. The storage medium and the processor may be provided in an ASIC. The ASIC may be provided in the mobile management node MME, the packet exchange station SGSN, the radio network controller RNC, the radio base station eNB/NodeB, and the mobile station UE. The storage medium and the processor may be provided as a discrete component in the mobile management node MME, the packet exchange station SGSN, the radio network controller RNC, the radio base station eNB/NodeB, and the mobile station UE.

Although the invention is described above in detail using the embodiment, it is clear for those skilled in the art that the invention is not limited to the embodiment. Modifications and changes of the invention can be made without departing from the scope of the invention, which is defined by claims. Accordingly, the description of the embodiment is made only by way of example, and the embodiment has no particular limitation to the invention.

### Reference Signs List

UE Mobile station
eNB, NodeB Radio base station
11 Cell information acquisition unit
12 Notification unit
13 Search unit
14 Identification information acquisition unit
MME Mobile management node
SGSN Packet exchange station
RNC Radio network controller

## Claims

1. A mobile communication method comprising the steps of:
acquiring, at a mobile station connected in a first cell controlled by a first-communication-system radio base station, information on a second cell controlled by a second-communication-system radio base station in response to an instruction from the first-communication-system radio base station;
reporting, from the mobile station to the first-communication-system radio base station, the acquired information on the second cell; and
notifying, from the first-communication-system radio base station to a second-communication-system radio network controller which provides service to the second cell, information on the first cell.

2. The mobile communication method according to claim 1, further comprising a step of:
searching, the first-communication-system radio base station, the second-communication-system radio network controller based on the received information on the second cell.

3. The mobile communication method according to claim 1, further comprising: a step of:
acquiring, at the first-communication-system radio base station, identification information on the
second-communication-system radio network controller, from a first-communication-system mobile management node or a second-communication-system packet exchange station, based on the received information on the second cell.

4. A radio base station that is of a first-communication-system radio base station, comprising:
a cell information acquisition unit configured to acquire information on a second cell controlled by a second-communication-system radio base station from a mobile station connected in a first cell controlled by the first-communication-system radio base station; and
a notification unit configured to notify, to a second-communication-system radio network controller which provides service to the second cell, information on the first cell.

5. The radio base station according to claim 4, further comprising:
a search unit configured to search the second-communication-system radio network controller based on the received information on the second cell.

6. The radio base station according to claim 4, comprising:
an identification information acquisition unit configured to acquire identification information on the second-communication-system radio network controller from a first-communication-system mobile management node or a second-communication-system packet exchange station based on the received information on the second cell.

7. The mobile communication method according to claim 1, further comprising a step of:
notifying, from the second-communication-system radio network controller to the first-communication-system radio base station, information on a cell managed by the second-communication-system radio network controller, in response to the notified information on the first cell.

8. The radio base station according to claim 4, wherein
the cell information acquisition unit is configured to acquire information on a cell managed by the second-communication-system radio network controller from the second-communication-system radio network controller, in response to the information on the first cell notified by the notification unit.
